# DEMANDE DE BREVET EUROPEEN

(11) **EP 1 843 458 A1**
(43) Date de publication de la demande: **10.10.2007**
(21) Numéro de dépôt: 06112396.4
(22) Date de dépôt: 07.04.2006
(51) Int. Cl.: H02N 10/00

(54) **Procédé et dispositif de production d'énergie en présence de circuit magnétique.**

(71) Demandeur: Université de Liège, 4031 Angleur (BE); Wathieu, Patrick, 1380 Lasne (BE)
(72) Inventeur: Wathieu, Patrick, 1380, Lasne (BE); Brassine, Christine, 4000, Liege (BE); Lecomte-Beckers, Jacqueline, 4000, Liege (BE)

(57) **Abrégé**

Procédé de production d'énergie à I'aide d'une rotation d'un rotor (1) par rapport à un stator en présence de circuit magnétique, comprenant
- un agencement d'au moins un circuit magnétique (6,9) ùo passe un flux magnétique et d'au moins un élément magnétique (2) au moins partiellement en un matériau présentant un point de Curie ou de Néel prédétermine, de façon que, pendant ladite rotation, ledit au moins un élément magnétique (2) traverse le flux de chaque circuit magnétique (6,9),
- une attraction entre chaque circuit magnétique (6,9) et une première partie d'un élément magnétique (2) susdit qui est située d'un premier côte du flux magnétique dudit circuit et qui présente une première température inférieure audit point de Curie ou de Néel prédéterminé,
- un chauffage (7) à une deuxième température supérieure audit point de Curie ou de Néel prédétermine d'une deuxième partie de cet élément magnétique (2) dont une première partie est attirée, cette deuxième partie étant située dans ledit flux magnétique dudit circuit (6,9) et/ou d'un deuxième côté de ce flux, oppose au premier côté,
- un déplacement relatif entre l'élément magnétique (2) dont une première partie est attirée et le circuit magnétique (6,9) qui lui correspond, avec traversée du flux magnétique dudit circuit par ladite première partie attirée de l'élément magnétique et rotation du rotor par rapport au stator, et
- un refroidissement (8) de chaque partie chauffée dudit au moins un élément magnétique (2) en dessous dudit point de Curie ou de Néel prédétermine, pendant Ia rotation du rotor.
Ce procédé comprant en outre.
- une interception par le flux magnétique de chaque circuit magnétique (6,9) susdit d'une section volumique d'élément magnétique (2) en matériau présentant ledit point de Curie ou de Néel prédéterminé qui est sensiblement constante dans n'importe quelle position angulaire du rotor, avec
- une rotation continue, sans à-coups, du rotor (1).

## Description

La présente invention est relative à un procédé de production d'énergie à l'aide d'une rotation d'un rotor par rapport à un stator en présence de circuit magnétique, comprenant
- un agencement d'au moins un circuit magnétique où passe un flux magnétique et d'au moins un élément magnétique au moins partiellement en un matériau présentant un point de Curie ou de Néel prédéterminé, de façon que, pendant ladite rotation, ledit au moins un élément magnétique traverse le flux de chaque circuit magnétique,
- une attraction entre chaque circuit magnétique et une première partie d'un élément magnétique susdit qui est située d'un premier côté du flux magnétique dudit circuit et qui présente une première température inférieure audit point de Curie ou de Néel prédéterminé,
- un chauffage à une deuxième température supérieure audit point de Curie ou de Néel prédéterminé d'une deuxième partie de cet élément magnétique dont une première partie est attirée, cette deuxième partie étant située dans ledit flux magnétique dudit circuit et/ou d'un deuxième côté de ce flux, opposé au premier côté,
- un déplacement relatif entre l'élément magnétique dont une première partie est attirée et le circuit magnétique qui lui correspond, avec traversée du flux magnétique dudit circuit par ladite première partie attirée de l'élément magnétique et rotation du rotor par rapport au stator, et
- un refroidissement de chaque partie chauffée dudit au moins un élément magnétique en dessous dudit point de Curie ou de Néel prédéterminé, pendant la rotation du rotor,
Elle concerne également un dispositif de mise en oeuvre d'un tel procédé (voir par exemple CN-1344057A).

Certains matériaux, comme les matériaux ferromagnétiques ou ferrimagnétiques, présentent la propriété du point de Curie ou du point de Néel.

A une température inférieure au point de Curie ou de Néel du matériau magnétique, celui-ci présente une perméabilité magnétique très élevée. La « force magnétique » s'exerçant sur le matériau magnétique soumis à un flux magnétique est donc élevée. Par contre lorsque l'on élève la température du matériau magnétique au-delà de sa température de Curie ou de Néel, sa susceptibilité magnétique chute de même que la force magnétique s'exerçant entre l'aimant et le matériau magnétique.

On peut alors mettre en oeuvre deux éléments magnétiques à température inférieure à la température de Curie, qui sont agencés solidaires l'un de l'autre et placés symétriquement de part et d'autre d'un flux magnétique. Le flux magnétique engendre une force sur chaque élément qui est de même intensité mais de sens contraire l'une par rapport à l'autre. Le système est en équilibre et aucun mouvement n'est observé. Par contre, si l'on chauffe un des deux éléments au-delà de sa température de Curie, la force exercée sur celui-ci chute. Il y a donc un déséquilibre de force qui engendre un déplacement tendant à attirer, dans le flux magnétique, l'élément dont la température est inférieure à la température de Curie. Le principe connu d'un tel moteur est utilisé suivant la présente invention.

Si à présent, comme dans la demande de brevet CN-1344057, on dispose les éléments magnétiques en cercle, à distance l'un de l'autre, de manière à pouvoir tourner autour d'un axe de façon solidaire, la résultante de force va engendrer une rotation du système. Un élément magnétique à température inférieure au point de Curie va être attiré par le champ magnétique tandis qu'un élément magnétique situé de l'autre côté de l'aimant est chauffé et n'est pas influencé par lui. Pendant qu'il est entraîné en rotation l'élément magnétique chauffé se refroidit progressivement, tandis que l'élément attiré par l'aimant traverse son flux et est chauffé à son tour et ainsi de suite, successivement, un élément magnétique suivant à faible température prend le relais de l'élément magnétique qui vient de passer au travers du flux magnétique. La force magnétique qui attire un élément magnétique de faible température situé d'un côté de l'aimant va donc croître au fur et à mesure de son rapprochement du champ magnétique, pour brusquement chuter lorsque cet élément magnétique est chauffé. Il en résulte pendant la rotation une variation de force en fonction de la position angulaire du système et la formation d'un mouvement saccadé peu favorable pour la production d'énergie.

Par ailleurs, comme l'élément magnétique chauffé doit avoir le temps de se refroidir en dessous du point de Curie avant de repasser devant l'aimant, la vitesse de rotation du rotor formé par les éléments magnétiques doit être prévue lente et le moteur obtenu est donc peu performant.

La présente invention a pour but de résoudre ces problèmes et de proposer un procédé et un dispositif permettant de produire de l'énergie de manière continue, sans variations de vitesse, et avantageusement d'une manière performante.

On résout ces problèmes, suivant l'invention, par un procédé tel qu'indiqué au début, qui comprend en outre
- une interception par le flux magnétique de chaque circuit magnétique susdit d'une section volumique d'élément magnétique en matériau présentant ledit point de Curie ou de Néel prédéterminé qui est sensiblement constante dans n'importe quelle position angulaire du rotor, avec
- une rotation continue, sans à-coups, du rotor.

Dans ce procédé, l'ensemble des forces magnétiques est constant dans toutes les positions angulaires du rotor. On se trouve dans la situation ou proche de la situation où la même surface de matériau magnétique est en permanence influencée par le flux magnétique du ou des circuits magnétiques.

Suivant un mode de réalisation, le rotor comprend ledit au moins un élément magnétique et le stator ledit au moins un circuit magnétique, et suivant un autre mode de réalisation, le rotor comprend ledit au moins un circuit magnétique et le stator ledit au moins un élément magnétique.

Suivant un mode avantageux de réalisation de l'invention ledit refroidissement comprend un apport de froid à chaque partie chauffée dudit au moins un élément magnétique pour qu'elle présente ladite première température lorsqu'elle est située audit premier côté du flux magnétique de chaque circuit magnétique susdit. Par ce mode de réalisation on réalise un profil de température dans la zone traversée par le flux magnétique, qui est tel qu'il y règne un déséquilibre entre la partie chauffée et la partie refroidie qui peut être très brusque. En effet, on s'arrange pour atteindre la température basse prédéterminée, inférieure au point de Curie, par un apport de froid qui ne résulte pas d'un simple échange de température avec le milieu ambiant. Il en résulte que la vitesse du rotor peut être envisagée beaucoup plus rapide que dans le dispositif selon l'état de la technique.

D'autres modes de réalisation du procédé suivant l'invention sont indiqués dans les revendications annexées.

On a également prévu suivant l'invention un dispositif de production d'énergie à l'aide d'une rotation d'un rotor par rapport à un stator en présence de circuit magnétique, comprenant
- au moins un circuit magnétique par lequel passe un flux magnétique, et au moins un élément magnétique au moins partiellement en un matériau présentant un point de Curie ou de Néel prédéterminé, qui sont mutuellement agencés de façon que, pendant ladite rotation, ledit au moins un élément magnétique traverse le flux de chaque circuit magnétique, une première partie d'un élément magnétique susdit, présentant une première température inférieure audit point de Curie ou de Néel prédéterminé, étant située d'un premier côté du flux magnétique de chaque circuit magnétique, et
- des moyens de chauffage d'une deuxième partie de l'élément magnétique susdit, située dans ledit flux magnétique de chaque circuit magnétique et/ou d'un deuxième côté de ce flux, opposé audit premier côté, qui sont capables de chauffer ladite deuxième partie à une deuxième température supérieure audit point de Curie ou de Néel prédéterminé.
Ce dispositif est caractérisé en ce que ledit au moins un élément magnétique présente une section volumique de matériau présentant ledit point de Curie ou de Néel prédéterminé, interceptée par le flux magnétique dudit au moins un circuit magnétique, qui est sensiblement constante dans n'importe quelle position angulaire du rotor.

Par aimant, il faut entendre suivant l'invention tout agencement permettant la constitution d'un circuit magnétique, notamment électromagnétique. Il peut donc s'agir d'un aimant permanent ou d'un électro-aimant.

Les moyens de chauffage sont usuels et permettent de transférer d'une manière quelconque de la chaleur audit au moins un élément magnétique, par exemple par conduction, convection, rayonnement, contact, lumière, etc. La source chaude peut être naturelle, par exemple la lumière du soleil, une source d'eau chaude, etc. ou artificielle, par exemple des eaux de processus industriels, énergie électrique.

Suivant une forme de réalisation du dispositif suivant l'invention, le rotor comprend ledit au moins un élément magnétique et le stator ledit au moins un circuit magnétique et, suivant une autre forme de réalisation, le rotor comprend ledit au moins un circuit magnétique et le stator ledit au moins un élément magnétique.

Suivant une forme avantageuse de réalisation du dispositif suivant l'invention, le dispositif comprend en outre des moyens de refroidissement de chaque partie chauffée dudit au moins un élément magnétique qui sont agencés dans ledit flux magnétique de chaque circuit magnétique et/ou du premier côté de ce flux magnétique pour les refroidir là à ladite première température.

Les moyens de refroidissement sont usuels et permettent de transférer d'une manière quelconque du froid audit au moins un élément magnétique. La source de froid peut être naturelle, par exemple de l'eau, ou artificielle, comme par exemple dans un système de réfrigération.

Le rotor peut avantageusement être agencé pour pouvoir tourner à l'intérieur d'un compartiment dans lequel les moyens de chauffage ou de refroidissement sont disposés.

Le rotor peut être réalisé d'un seul tenant en matériau à propriétés magnétiques, ou il peut comporter des éléments magnétiques, disposés par exemple annulairement et thermiquement isolés l'un de l'autre.

Le rotor peut être un aimant lui-même, ou uniquement les extrémités polaires de celui-ci . Dans ce cas, avantageusement le rotor comprend en outre lesdits moyens de chauffage et éventuellement lesdits moyens de refroidissement.

Différents matériaux magnétiques peuvent être envisagés en fonction des températures supérieure et inférieure choisies. Le choix est réalisé en fonction de la température de Curie ou de Néel du matériau magnétique et on choisira de préférence un matériau dont la transition entre la perméabilité magnétique maximale et la perméabilité magnétique minimale s'effectue sur un intervalle de température le plus faible possible.

Comme matériaux magnétiques adaptés pour l'invention, on peut citer des matériaux de type ferromagnétique ou ferrimagnétique. Par exemple, il est possible d'utiliser le Fe, le Ni, le Co, le Gd et/ou le Dy ainsi que leurs alliages. Les composés binaires de type R-T où R est l'yttrium, le lanthane ou une des 14 terres rares et T est un des éléments de la série de transition, et les alliages magnétiques à base de Mn ou de Pt, et les composés ternaires de type Nd-Fe-B peuvent également convenir. Finalement, on peut aussi citer des ferrites répondant à la formule Me^{x+}[Me']₂^{((8-x)/2)+}O₄²⁻ où Me représente des métaux de la première série de transition.

Différents éléments peuvent aussi permettre de réaliser des alliages dont la température de Curie est différente de celle des éléments ferromagnétiques. On peut citer comme éléments d'alliage : Al, As, B, Be, Ce, Cu, Eu, Ge, Gd, Mn, Nb, Nd, Pd, Pt, Pu, Rh, Sb, Sm, Si, Th, Ti, V, W, Zn.

D'autres formes de réalisation du dispositif suivant l'invention sont indiquées dans les revendications annexées.

D'autres détails et particularités de l'invention ressortiront de la description donnée ci-dessous, à titre non limitatif et avec référence aux dessins annexés.

Les figures 1 à 3 représentent de manière schématique trois variantes de réalisation de dispositif suivant l'invention.

Les figures 4 et 5 représentent de manière schématique, dans une vue en perspective, deux agencements d'aimant pour un dispositif suivant l'invention.

Les figures 6 et 7 représentent encore deux autres variantes du dispositif suivant l'invention.

La figure 8 représente une variante de rotor pour un dispositif suivant l'invention.

La figure 9 représente une vue en perspective d'un aimant capable de fonctionner comme rotor.

La figure 10 représente de manière schématique un dispositif suivant l'invention muni d'un aimant selon la figure 9.

Sur les différentes figures, les éléments identiques ou analogues portent les mêmes références.

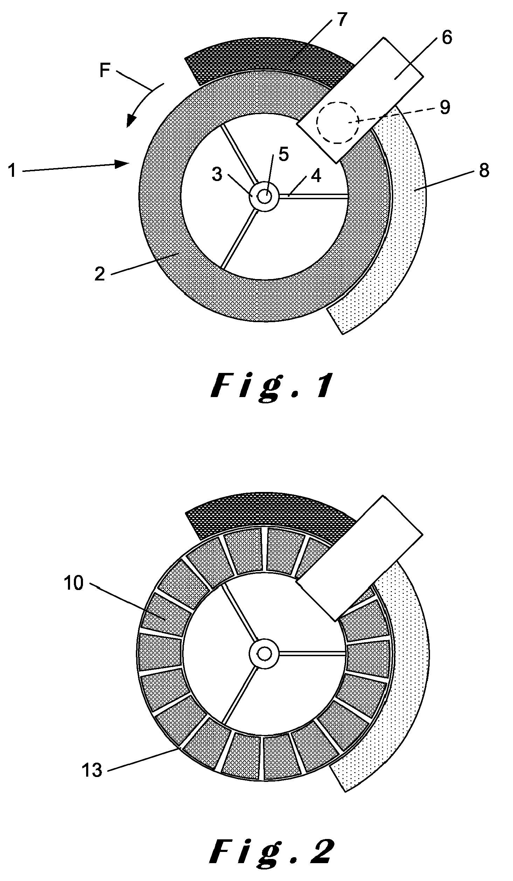

Ainsi qu'il ressort de l'exemple de réalisation illustré sur la figure 1, le dispositif suivant l'invention comprend un rotor 1 qui, sous la forme d'un anneau 2 entièrement constitué d'un matériau magnétique présentant un point de Curie, représente ici l'élément magnétique du dispositif. Cet anneau est fixé sur un arbre 3 par des rayons 4, l'arbre 3 étant monté de manière à pouvoir tourner autour d'un axe de rotation 5 agencé de manière fixe.

Le dispositif comprend en outre un aimant 6, par exemple un aimant permanent qui forme un entrefer à travers lequel passe le rotor. Le rotor traverse ainsi le circuit magnétique de l'aimant et donc le flux magnétique passant par ce circuit. La partie de l'aimant 6 visible sur la figure 1 est une des pièces polaires formant l'entrefer, l'autre pièce polaire étant située de l'autre côté du rotor en face de la première.

Des moyens de chauffage 7 usuels sont prévus pour chauffer une partie du rotor 1 disposée d'un côté de l'aimant 6. La représentation donnée est schématique et est prévue principalement pour illustrer la partie de l'anneau 2 qui est soumise au chauffage. Ces moyens de chauffage peuvent se présenter sous la forme d'un compartiment ou d'un tunnel qui entoure totalement ou partiellement l'anneau 2 ou d'un élément chauffant inséré dans le matériau magnétique ou encore d'organes irradiant de la chaleur ou d'autres dispositifs connus en soi de l'homme de métier.

De l'autre côté de l'aimant 6, on a prévu des moyens de refroidissement 8 qui, comme pour les moyens 7, sont représentés de manière schématique, en vue principalement d'illustrer la partie de l'anneau 2 qui est refroidie.

Dans l'exemple illustré, dans la partie non soumise à l'action des moyens 7 et 8, l'anneau 2 tourne dans le milieu ambiant, par exemple l'atmosphère à température ambiante. On pourrait bien sur imaginer aussi que les moyens 7 et 8 s'étendent sur toute la circonférence du motor.

Le flux magnétique 9 fermant le circuit magnétique de l'aimant 6 est représenté de manière schématique sur la figure 1 en traits interrompus. Comme on peut le noter, quelle que soit la position angulaire du rotor 1, la surface de matériau magnétique du rotor 1 traversée par le flux magnétique 9 reste parfaitement identique.

Lorsque les moyens de chauffage 7 et de refroidissement 8 ne sont pas en service le profil de température du rotor 1 est à l'équilibre et les forces magnétiques sont constantes et égales de part et d'autre de l'aimant, de sorte qu'elles s'annulent .

Lorsque les moyens de chauffage 7 et de refroidissement 8 sont mis en service, la partie de l'anneau 2 élevée à une température supérieure au point de Curie ou de Néel n'est pas soumise à l'influence du circuit magnétique. Celui-ci attire la partie de l'anneau 2 refroidie et le rotor se met à tourner dans le sens de la flèche F. Et comme la surface de matériau magnétique traversée par le flux 9 reste identique dans toutes les positions angulaires du rotor, la rotation de celui-ci est continue, sans à-coups. Il n'y a donc pas de variation au cours du temps de la force d'attraction de l'aimant sur le rotor.

L'arbre 3 du rotor 1 entraîné en rotation développe alors une énergie mécanique qui peut être exploitée par exemple dans une turbine ou par l'intermédiaire d'une transmission à engrenages. On peut aussi prévoir la transformation de cette énergie mécanique en énergie électrique d'une manière connue en soi.

Après avoir été chauffé dans les moyens de chauffage 7, le rotor 1 passe dans le milieu ambiant et un échange thermique a lieu entre celui-ci et le rotor par contact direct. Dans la mesure où la température ambiante est inférieure au point de Curie du matériau du rotor, le refroidissement par échange thermique avec l'air peut suffire, mais cela risque de limiter la vitesse de rotation du rotor 1 de manière défavorable au point que la température de celui-ci n'ait pas le temps de descendre en dessous du point de Curie. D'où l'avantage de prévoir en outre les moyens de refroidissement 8.

Avantageusement le matériau dans lequel l'aimant est construit sera au moins partiellement réalisé en un matériau magnétique présentant un point de Curie supérieur à la température obtenue par les moyens de chauffage 7.

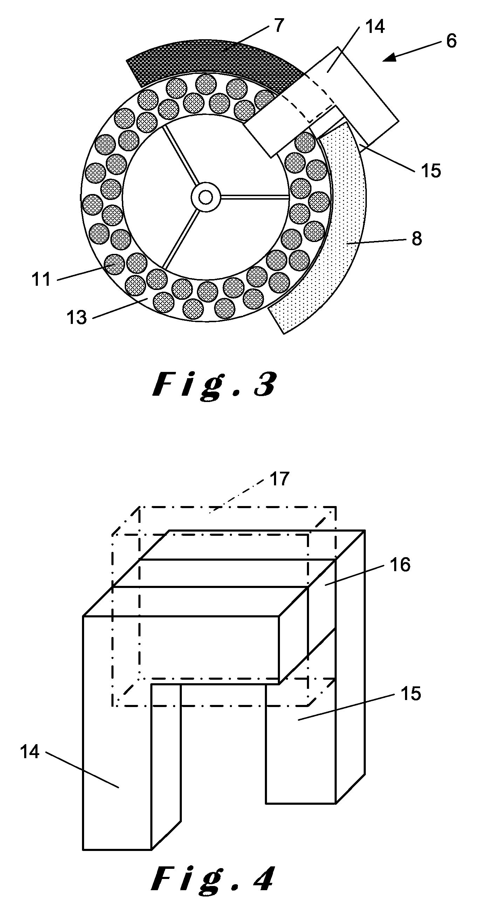

Dans les exemples de réalisation suivant les figures 2 et 3 l'anneau continu 2 est remplacé par des éléments magnétiques 10 ou respectivement 11 disposés annulairement autour de l'axe de rotation, par exemple en étant supportés sur un disque de support 13 magnétiquement inerte. L'intérêt de cet agencement est de limiter la conduction thermique au sein du matériau magnétique, qui complique l'établissement d'un profil de température tel que Tₘᵢₙ < T_{C} <Tₘₐₓ, où T_{C} est le point de Curie du matériau utilisé, sur une distance la plus faible possible, à proximité de l'aimant. On prévoit entre les éléments un intervalle d'isolation aussi faible que possible. Il peut être formé d'air ou d'un matériau thermiquement isolant et magnétiquement inerte.

Dans la variante illustrée sur la figure 3, les éléments magnétiques sont disposés en deux rangées, de façon à être agencés en quinconce. Il y a donc ici un chevauchement des éléments magnétiques ce qui permet de maintenir aisément une surface constante de matériau magnétique traversé par le flux de l'aimant quelle que soit la position angulaire du rotor.

On pourrait évidemment prévoir, au lieu d'un agencement des éléments magnétiques sur un disque de support 13, leur fixation directe sur l'arbre 3 par des rayons 4 individuels.

Dans la variante de la figure 3, on fait usage d'un aimant tel qu'illustré sur la figure 4. Ici deux pièces polaires 14 et 15 sont disposées de part et d'autre du rotor de manière décalée et de façon à prolonger un aimant permanent 16. L'aimant peut être isolé thermiquement par un boîtier 17, pour autant que l'agencement conserve un flux magnétique suffisamment important. Les pièces polaires 14 et 15 prolongent à l'extérieur le circuit magnétique et sont elles en un matériau à point de Curie élevé (Fe, Co par exemple). Dans ce cas , l'axe du flux magnétique qui traverse le rotor présente une orientation en oblique qui permet de disposer les moyens de chauffage et/ou de refroidissement 7 et 8 au voisinage de la zone du rotor traversée par le flux. Les moyens de chauffage 7 peuvent s'étendre jusque devant la pièce polaire 14, comme représenté en traits interrompus sur la figure 3, et les moyens de refroidissement 8 jusque devant la pièce polaire 15.

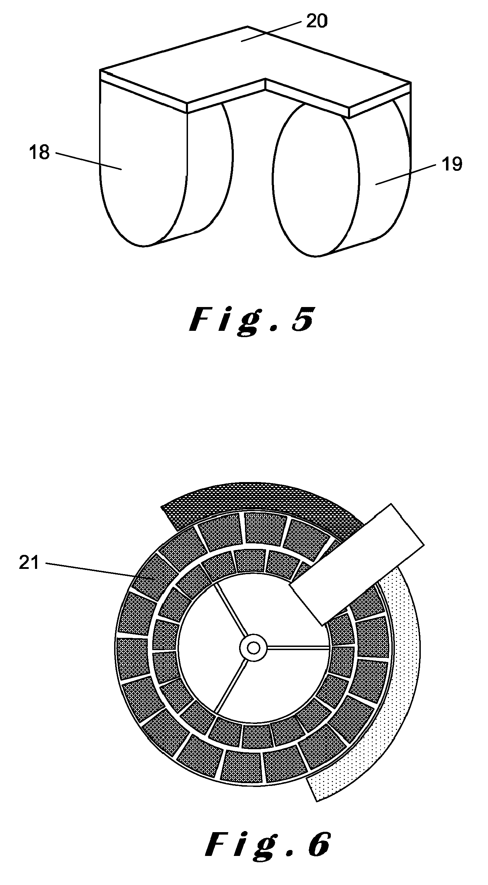

Comme variante à cet agencement, on peut prévoir un circuit magnétique tel que représenté à la figure 5. Deux aimants 18 et 19, sous forme de pastilles de matière magnétique, sont mutuellement reliés par une plaquette de support 20 en matériau magnétiquement perméable. Cette plaquette a une forme de L de façon que les deux aimants puissent être disposés de part et d'autre du rotor, en quinconce, et que le flux magnétique soit orienté en oblique.

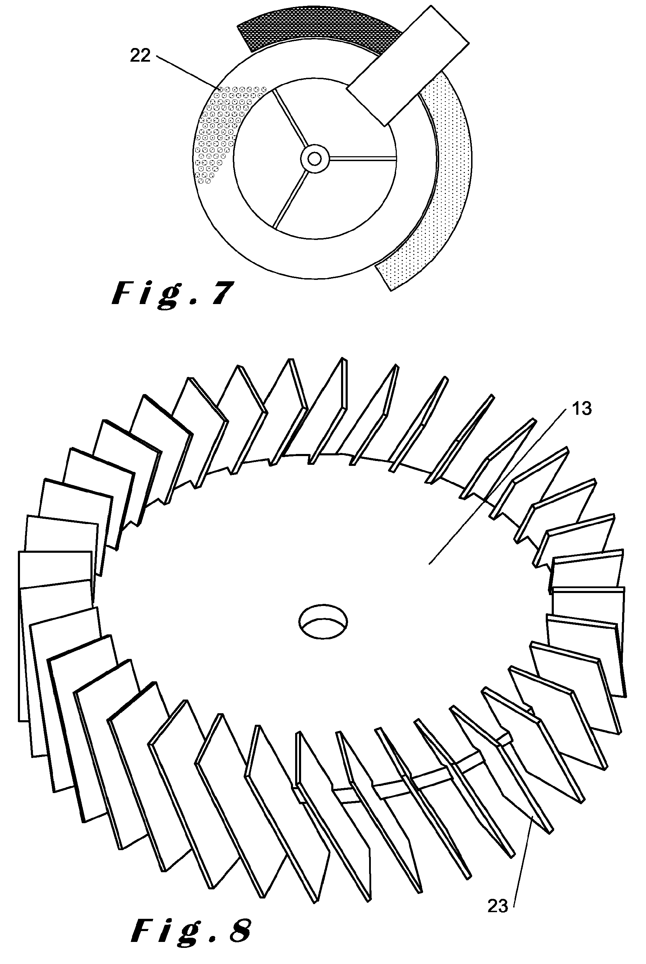

Les variantes de réalisation sur les figures 6 et 7 illustrent encore d'autres agencements possibles, et non limitatifs, des éléments magnétiques 21 et 22 sur le rotor. On remarque que la géométrie des éléments magnétiques n'est pas critique et que plus le nombre de rangées disposées en quinconce augmente, plus la force globale résultant des différents éléments soumis à l'interaction avec le flux magnétique tend vers une constante absolue en fonction de la position angulaire.

La rotation à vitesse constante résulte en fait de la combinaison entre une force d'attraction globale qui se rapproche d'une constante et l'inertie du rotor.

La figure 8 illustre un rotor formé d'un anneau de support 13 en un matériau magnétiquement inerte et de préférence thermiquement non conducteur. A la périphérie du disque, des éléments magnétiques en forme d'ailettes minces 23 sont disposés de manière inclinée par rapport au plan de l'anneau 13, de façon qu'elles se chevauchent partiellement. Cet agencement présente l'avantage de réaliser un très bon transfert de chaleur entre les moyens de chauffage et de refroidissement et lesdites ailettes, grâce à leurs minceur, ce qui donne lieu à une nette amélioration de la rotation. Par ailleurs, on dispose de suffisamment de matériau magnétique pour permettre une force magnétique importante et un couple important. Enfin, le chevauchement des ailettes permet d'obtenir une interaction entre le flux magnétique et les éléments magnétiques tendant vers une constante, en permettant donc un mouvement continu.

Comme exemple d'alliage convenant pour le rotor, on peut, à titre non limitatif, proposer l'alliage suivant où les pourcentages sont exprimés en masse : Un alliage d'environ 40 % de Ni et 20 % de Fe est réalisé en partant d'un mélange homogène de poudre de Cu à raison de 40,0246 %, de poudre de Ni à raison de 39,6863 % et de poudre de Fe à raison de 20,2891 %. Ce mélange est compacté à une pression de 9 tonnes et ensuite traité thermiquement selon le cycle suivant réalisé sous atmosphère d'argon : montée en température jusqu'à 1000°C à 3°C/min, suivie d'un palier à 1000°C pendant 60 min. Un essai de thermogravimétrie en présence d'un champ magnétique extérieur montre que la température de Curie de l'alliage est de 522°C et que l'intervalle de température entre perméabilité magnétique maximum et perméabilité magnétique minimum est de 6°C.

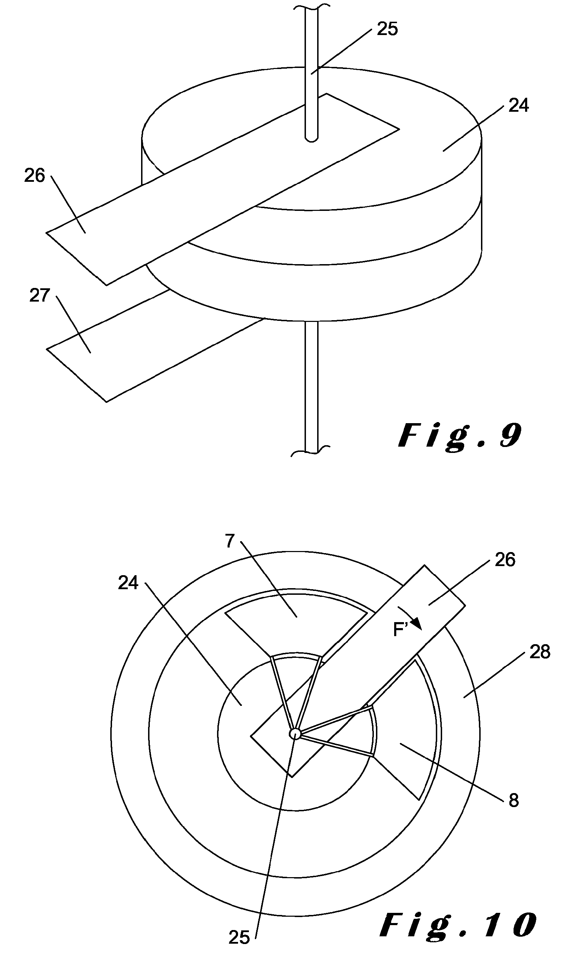

Sur les figures 9 et 10 on a prévu un exemple de réalisation où le rotor comprend une partie de l'aimant. Dans cet exemple de réalisation, l'aimant 24 se distingue par une forme circulaire, à magnétisation radiale, comportant un pôle Nord sur sa face supérieure et un pôle Sud sur sa face inférieure. Cet aimant est stationnaire. En son centre il est traversé par un axe 25 de manière que ce dernier soit capable de pivoter sur lui-même. Deux armatures formant les pièces polaires 26 et 27 de l'aimant sont fixées sur l'axe 25 de façon à pouvoir l'entraîner en rotation lorsque ces pièces 26 et 27 sont déplacées. Dans cet agencement, chaque point du circuit magnétique se trouve d'une manière constante, au cours de la rotation des pièces polaires, à une distance identique à tous les points de l'aimant et il n'existe donc aucune différence de potentiel magnétique entre l'aimant et les pièces polaires au cours de cette rotation.

Le dispositif sur la figure 10 comporte un anneau 28 en matériau magnétique ou portant des éléments magnétiques comme indiqué précédemment. Cet anneau est supporté de manière stationnaire de façon que pendant la rotation de l'aimant il passe dans l'entrefer formé entre les pièces polaires 26 et 27. Il forme ici le stator.

Dans cet exemple de réalisation, l'axe 25 supporte aussi de manière solidaire les moyens susdits de chauffage 7 et de refroidissement 8.

Lorsque ces derniers sont mis en service, l'attraction réalisée entre le circuit magnétique passant par les pièces polaires 26 et 27 et la partie refroidie de l'anneau immobile 28 ainsi que l'absence d'attraction existant entre ce circuit magnétique et la partie chauffée de l'anneau entraîne l'ensemble formé par les pièces polaires 26 et 27, les moyens de chauffage 7, les moyens de refroidissement 8 et l'axe 25 en rotation dans le sens de la flèche F'.

Il doit être entendu que la présente invention n'est en aucune façon limitée aux formes de réalisation décrites ci-dessus et que bien des modifications peuvent y être apportées sans sortir du cadre des revendications annexées.

On pourrait par exemple imaginer une forme de réalisation semblable à celle illustrée sur la figure 10, où l'ensemble rotatif comprend aussi l'aimant 24 lui-même.

On peut aussi prévoir que les moyens de chauffage et de refroidissement soient stationnaires, mais capables de chauffer ou respectivement refroidir chaque partie d'anneau en fonction de sa position par rapport au circuit magnétique en train de tourner.

On pourrait aussi considérer la possibilité d'avoir un dispositif où T Curie, T source chaude et T source froide sont toutes les trois inférieures à T ambiante. ; ou encore un dispositif où T ambiante est la source chaude.

## Revendications

1. Procédé de production d'énergie à l'aide d'une rotation d'un rotor par rapport à un stator en présence de circuit magnétique, comprenant
- un agencement d'au moins un circuit magnétique où passe un flux magnétique et d'au moins un élément magnétique au moins partiellement en un matériau présentant un point de Curie ou de Néel prédéterminé, de façon que, pendant ladite rotation, ledit au moins un élément magnétique traverse le flux de chaque circuit magnétique,
- une attraction entre chaque circuit magnétique et une première partie d'un élément magnétique susdit qui est située d'un premier côté du flux magnétique dudit circuit et qui présente une première température inférieure audit point de Curie ou de Néel prédéterminé,
- un chauffage à une deuxième température supérieure audit point de Curie ou de Néel prédéterminé d'une deuxième partie de cet élément magnétique dont une première partie est attirée, cette deuxième partie étant située dans ledit flux magnétique dudit circuit et/ou d'un deuxième côté de ce flux, opposé au premier côté,
- un déplacement relatif entre l'élément magnétique dont une première partie est attirée et le circuit magnétique qui lui correspond, avec traversée du flux magnétique dudit circuit par ladite première partie attirée de l'élément magnétique et rotation du rotor par rapport au stator, et
- un refroidissement de chaque partie chauffée dudit au moins un élément magnétique en dessous dudit point de Curie ou de Néel prédéterminé, pendant la rotation du rotor,
**caractérisé en ce qu'**il comprend en outre
- une interception par le flux magnétique de chaque circuit magnétique susdit d'une section volumique d'élément magnétique en matériau présentant ledit point de Curie ou de Néel prédéterminé qui est sensiblement constante dans n'importe quelle position angulaire du rotor, avec
- une rotation continue, sans à-coups, du rotor.

2. Procédé suivant la revendication 1, **caractérisé en ce que** le rotor comprend ledit au moins un élément magnétique et le stator ledit au moins un circuit magnétique.

3. Procédé suivant la revendication 1, **caractérisé en ce que** le rotor comprend ledit au moins un circuit magnétique et le stator ledit au moins un élément magnétique.

4. Procédé suivant la revendication 1, **caractérisé en ce que** ledit refroidissement comprend un apport de froid à chaque partie chauffée dudit au moins un élément magnétique pour qu'elle présente ladite première température lorsqu'elle est située audit premier côté du flux magnétique de chaque circuit magnétique susdit.

5. Procédé suivant la revendication 4, **caractérisé en ce que** ledit refroidissement comprend, avant ledit apport de froid, un échange thermique entre chaque partie chauffée susdite et un milieu ambiant présentant une température intermédiaire auxdites première et deuxième températures.

6. Procédé suivant l'une quelconque des revendications 1 à 5, **caractérisé en ce qu'**il comprend une isolation thermique entre ladite première partie et ladite deuxième partie situées de part et d'autre du flux magnétique d'un même circuit magnétique.

7. Dispositif de production d'énergie à l'aide d'une rotation d'un rotor par rapport à un stator en présence de circuit magnétique, comprenant
- au moins un circuit magnétique (6, 14-16, 18-20, 24, 26, 27) par lequel passe un flux magnétique (9), et au moins un élément magnétique (2, 10, 11, 21-23, 28) au moins partiellement en un matériau présentant un point de Curie ou de Néel prédéterminé, qui sont mutuellement agencés de façon que, pendant ladite rotation, ledit au moins un élément magnétique traverse le flux de chaque circuit magnétique, une première partie d'un élément magnétique susdit, présentant une première température inférieure audit point de Curie ou de Néel prédéterminé, étant située d'un premier côté du flux magnétique de chaque circuit magnétique, et
- des moyens de chauffage (7) d'une deuxième partie de l'élément magnétique susdit, située dans ledit flux magnétique de chaque circuit magnétique et/ou d'un deuxième côté de ce flux, opposé audit premier côté, qui sont capables de chauffer ladite deuxième partie à une deuxième température supérieure audit point de Curie ou de Néel prédéterminé,
**caractérisé en ce que** ledit au moins un élément magnétique présente une section volumique de matériau présentant ledit point de Curie ou de Néel prédéterminé, interceptée par le flux magnétique dudit au moins un circuit magnétique, qui est sensiblement constante dans n'importe quelle position angulaire du rotor.

8. Dispositif suivant la revendication 7, **caractérisé en ce que** le rotor comprend ledit au moins un élément magnétique (2, 10, 11, 21-23) et le stator ledit au moins un circuit magnétique (6, 14-16, 18-20).

9. Dispositif suivant la revendication 7, **caractérisé en ce que** le rotor comprend ledit au moins un circuit magnétique (24, 26, 27) et le stator ledit au moins un élément magnétique (28) .

10. Dispositif suivant l'une des revendications 7 à 9, **caractérisé en ce que** le dispositif comprend en outre des moyens de refroidissement (8) de chaque partie chauffée dudit au moins un élément magnétique qui sont agencés dans ledit flux magnétique de chaque circuit magnétique et/ou du premier côté de ce flux magnétique pour les refroidir là à ladite première température.

11. Dispositif suivant l'une des revendications 7, 8 et 10, **caractérisé en ce que** chaque circuit magnétique comprend un aimant et deux pièces polaires (14, 15, 18, 19) entre lesquelles est ménagé un entrefer dans lequel le rotor (1) peut tourner.

12. Dispositif suivant la revendication 11, **caractérisé en ce que** les deux pièces polaires sont disposées l'une en face de l'autre de part et d'autre dudit rotor.

13. Dispositif suivant la revendication 11, **caractérisé en ce que** les deux pièces polaires (14, 15, 18, 19) sont disposées de part et d'autre dudit rotor de manière décalée.

14. Dispositif suivant la revendication 13, **caractérisé en ce qu'**une desdites deux pièces polaires (14) est agencée de manière à être chauffée par lesdits moyens de chauffage (7) et présente un point de Curie ou de Néel supérieur à ladite deuxième température.

15. Dispositif suivant la revendication 14, **caractérisé en ce que** l'autre desdites deux pièces polaires (15) est agencée de manière à être refroidie par lesdits moyens de refroidissement (8).

16. Dispositif suivant l'une des revendications 11 à 15, **caractérisé en ce que** ledit aimant (16) présente une isolation thermique (17) vis-à-vis de l'extérieur.

17. Dispositif suivant l'une des revendications 7, 8 et 10 à 16, **caractérisé en ce que** ledit au moins un élément magnétique du rotor est un anneau (2) continu, totalement en ledit matériau magnétique.

18. Dispositif suivant l'une des revendications 7, 8 et 10 à 16, **caractérisé en ce que** le rotor tourne autour d'un axe de rotation (5) et comporte des éléments magnétiques (10, 11, 21-23) disposés annulairement de manière uniformément répartie autour dudit axe (5) et thermiquement isolés l'un de l'autre.

19. Dispositif suivant l'une des revendications 17 et 18, **caractérisé en ce que** le rotor comprend en outre un support (13) magnétiquement inerte qui porte ledit anneau en matériau magnétique ou lesdits éléments magnétiques et est entraîné par eux en rotation.

20. Dispositif suivant l'une des revendications 18 et 19, **caractérisé en ce que** lesdits éléments magnétiques (11, 21, 22) sont disposés autour de l'axe de rotation en au moins deux rangées, les éléments magnétiques de deux rangées voisines étant agencés en quinconce.

21. Dispositif suivant la revendication 19, **caractérisé en ce que** le support magnétiquement inerte est un anneau (13) tournant dans un plan, qui porte lesdits éléments magnétiques (23) d'une manière inclinée par rapport audit plan et de façon qu'ils se chevauchent partiellement.

22. Dispositif suivant l'une des revendications 7, 9 et 10, **caractérisé en ce que** chaque circuit magnétique comprend un aimant supporté sur un axe de manière à pouvoir tourner autour de celui-ci.

23. Dispositif suivant l'une des revendications 7, 9 et 10, **caractérisé en ce que** ledit au moins un circuit magnétique comprend un aimant (24) supporté de manière fixe et au moins deux pièces polaires (26, 27) entre lesquelles est ménagé un entrefer où le stator peut se situer, les pièces polaires étant supportées sur un axe (25) de manière à pouvoir effectuer ladite rotation.

24. Dispositif suivant l'une quelconque des revendications 9, 10, 22 et 23, **caractérisé en ce que** le rotor comprend en outre lesdits moyens de chauffage et éventuellement lesdits moyens de refroidissement.
